# EUROPÄISCHE PATENTSCHRIFT

(11) **EP 2 935 087 B1**
(45) Veröffentlichungstag und Bekanntmachung des Hinweises auf die Patenterteilung: **12.10.2022**
(21) Anmeldenummer: 13796025.8
(22) Anmeldetag: 20.11.2013
(51) Int. Cl.: B66F 9/075, B66F 17/00, B62D 7/15, B62D 61/06, B60K 31/00

(54) **LENKVERFAHREN UND FLURFÖRDERZEUG**
STEERING METHOD AND INDUSTRIAL TRUCK
PROCÉDÉ DE DIRECTION ET CHARIOT DE MANUTENTION

(30) Priorität: 20.12.2012 DE 102012112743
(43) Veröffentlichungstag der Anmeldung: 28.10.2015
(73) Patentinhaber: Hubtex Maschinenbau GmbH & Co. Kg, 36041 Fulda (DE)
(72) Erfinder: KELLER, Jürgen, 36137 Grossenlüder (DE)
(74) Vertreter: Kluin, Jörg-Eden
(86) Internationale Anmeldenummer: PCT/EP2013/074239
(87) Internationale Veröffentlichungsnummer: WO 2014/095212

(56) Entgegenhaltungen:
- EP-A1- 2 508 403
- WO-A1-2008/141836
- WO-A1-2011/113127
- DE-B4-102010 016 470

## Beschreibung

Die Erfindung betrifft ein Lenkverfahren eines Flurförderzeugs mit mindestens zwei angetriebenen, in Längsfahrt in verschiedenen Spuren laufenden Rädern, von denen mindestens eines lenkbar ist und mindestens eines bei einer Kurvenfahrt zunächst innen läuft. Die Erfindung betrifft darüber hinaus ein derartiges Flurförderzeug, welches eine Einrichtung zur Beeinflussung der Antriebsleistung der angetriebenen Räder umfasst.

Ein derartiges Lenkverfahren und ein derartiges Flurförderzeug sind aus der DE 10 2010 016 470 B4 bekannt. Bei diesem Flurförderzeug handelt es sich um ein dreirädriges Fahrzeug. Sämtliche Räder sind um etwa senkrecht zu den Radachsen und etwa parallel zueinander verlaufende Lenkachsen lenkbar angeordnet. Das Flurförderzeug umfasst die Fahrprogramme "Längsfahrt" und "Querfahrt". Um zwischen einer Längsfahrt und einer etwa senkrecht hierzu gerichteten Querfahrt wechseln zu können, ist ein Lenkcomputer vorgesehen, mittels welchem die den Rädern jeweils zugeordneten Lenkeinrichtungen derart beaufschlagbar sind, dass sich die Räder in einer Neutralstellung eines Lenkgebers, beispielsweise eines Lenkrades in Geradeausstellung in der jeweiligen Fahrtrichtung befinden. Alle Drehachsen der gelenkten Räder verlaufen in dieser Position zumindest im Wesentlichen parallel oder deckungsgleich, mit anderen Worten: Der Lenkpol liegt im Unendlichen.

Sämtliche Räder dieses Fahrzeugs sind über jeweils zugeordnete Antriebseinrichtungen antreibbar. Bei diesen Antriebseinrichtungen kann es sich insbesondere um elektrisch oder hydraulisch betriebene Motoren handeln.

Befindet sich dieses Fahrzeug im Fahrprogramm "Längsfahrt", so laufen zwei seiner Räder hintereinander in ein und derselben ersten Spur. In der zweiten Spur läuft das dritte Rad. Es befindet sich in Längsfahrtrichtung gesehen etwa zwischen den beiden, in der ersten Spur laufenden Rädern und wird somit auch als "Mittelrad" bezeichnet.

Befindet sich das Fahrzeug in seiner Längsfahrt, so werden die Lenkeinrichtungen der beiden in der ersten Spur laufenden Räder entsprechend der mit Hilfe des Lenkgebers erzeugten Lenkbefehle gelenkt. Das Mittelrad wird nicht gelenkt.

Wird das Flurförderzeug aus der Längsfahrt in eine Kurvenfahrt gelenkt, bei welcher sich das Mittelrad zunächst im Kurveninneren befindet, so reduziert sich gegenüber den kurvenäußeren Rädern seine Drehgeschwindigkeit. Beim Einlenken nähert sich der Lenkpol der beiden in der ersten Spur laufenden Räder immer weiter der Lenkachse des Mittelrades an. Das Mittelrad muss stillstehen, wenn der Lenkpol mit dessen Lenkachse zusammenfällt. Beim weiteren Einlenken, wenn der Lenkpol zwischen das Mittelrad und die in der ersten Spur laufenden Räder gelangt und sich somit das Flurförderzeug um eine zwischen den Rädern liegende Drehachse dreht, sich somit in einer "Karusselfahrt" befindet, muss sich schließlich das Mittelrad in umgekehrter Richtung drehen.

Aus der WO 2011/113127 A1 ist ein dreirädriges Fahrzeug mit zwei angetriebenen und gelenkten Rädern auf einer Fahrzeugseite und einem einzigen, grundsätzlich nicht angetriebenen und nicht gelenkten Rad auf der anderen Fahrzeugseite bekannt. Es ist erwähnt, dass in das grundsätzlich nicht angetriebene und nicht gelenkte Rad Traktron mit einem Entkopplungstraktronssystem, wenn eine bestimmte Kurvenfahr ausgeführt wird, eingeleitet werden kann.

Aus der WO 2008/141836 A1 ist ebenfalls ein dreirädriges Fahrzeug bekannt, bei dem die Räder in Längs-, Quer- und Kurvenfahrt bis hin zur Karussellfahrt lenkbar sind. Bei einem Übergang in die Karussellfahrt wird die Antriebsdrehrichtung des Mittelrads mittels eines Ventils umgeschaltet.

Die EP 2 508 403 A1 offenbart ein Verfahren zur Reduzierung der Fahrgeschwindigkeit eines Flurförderzeugs in Abhängigkeit der Fahrgeschwindigkeit, des Solllenkwinkels und der Änderungsgeschwindigkeit des Solllenkwinkels.

Der Erfindung liegt die Aufgabe zugrunde, ein Lenkverfahren und ein Flurförderzeug zu schaffen, mit welchem ein zuvor beschriebener Lenkvorgang möglich ist, ohne dass es hierbei zu unerwünschten, unkontrollierten Fahrzuständen und zu einem überhöhten Verschleiß, insbesondere der Räder kommt.

Diese Aufgabe wird durch das in Anspruch 1 wiedergegebene Lenkverfahren und durch das in Anspruch 4 wiedergegebene Flurförderzeug gelöst.

Bei dem erfindungsgemäßen Lenkverfahren wird der Antrieb des mindestens einen, bei einer Kurvenfahrt zunächst innen laufenden Rades, beispielsweise des Mittelrades, bei Erreichen eines bestimmten Lenkwinkels des mindestens einen gelenkten Rades aus der Längsfahrtstellung frei geschaltet. Die Wortfolge "bei einer Kurvenfahrt zunächst innen laufenden Rades" soll verdeutlichen, dass dieses Rad beim Einlenken in eine Kurvenfahrt solange innen verläuft, bis der durch die gelenkten Räder definierte Lenkpol zwischen die gelenkten Räder und das innen laufende Rad wandert und das Flurförderzeug in eine Karusselfahrt übergeht. Unter "frei geschaltet" ist zu verstehen, dass das zuvor angetriebene Rad nicht mehr mit einem Antriebsmoment beaufschlagt wird. Dies kann bei einem elektromotorischen Antrieb beispielsweise durch ein Abschalten der Versorgungsspannung, bei einem hydraulischen Antrieb durch eine Unterbrechung der Zufuhr der Hydraulikflüssigkeit bewirkt werden. Alternativ könnte auch ein schaltbarer Freilauf vorgesehen sein, welcher das Rad bei Erreichen des Lenkwinkels von der Antriebseinrichtung trennt.

Aufgrund dieser Maßnahme wird zuverlässig vermieden, dass es bei engen Kurvenradien, bis hin zur Karusselfahrt, zu einem Radieren der Räder auf dem Untergrund kommt, welches den Verschleiß der Räder erhöhen würde und zu unkontrollierbaren Fahrzuständen des Flurförderzeugs führen könnte. Mit Hilfe des erfindungsgemäßen Lenkverfahrens wird ein "weicher" Übergang von einer Kurvenin eine Karusselfahrt sichergestellt.

Ferner wird die Antriebsleistung der mindestens zwei angetriebenen Räder bei Erreichen eines bestimmten Lenkwinkels, der regelmäßig kleiner als derjenige Lenkwinkel ist, bei dem das Flurförderzeug von der Kurven- in die Karusselfahrt übergeht, reduziert, auch "Inchen" genannt. Die Fahrgeschwindigkeit des Flurförderzeugs nimmt somit bei Unterschreiten eines bestimmten Kurvenradius automatisch ab, wodurch abermals die Gefahr reduziert wird, dass das Flurförderzeug in einen unkontrollierten Fahrzustand gelangt.

Aufgrund dieser automatischen Antriebsleistungsreduzierung ist es möglich, dass insbesondere bei kleinen Kurvenradien die Antriebsleistung nicht mehr ausreicht, um das Flurförderzeug über Hindernisse und/oder über die Rollreibung deutlich erhöhende Untergründe zu bewegen.

Bei dem erfindungsgemäßen Lenkverfahren erfolgt die Leistungserhöhung der mindestens zwei angetriebenen Räder bei Unterschreiten eines bestimmten Kurvenradius automatisch. Hierzu wird die Drehzahl des mindestens einen bei einer Kurvenfahrt zunächst innen laufenden Rades aufgenommen und eine Regeleinrichtung zur Regelung der Antriebsleistung im Sinne einer Erhöhung derselben angesteuert, sobald die Drehzahl des mindestens einen bei einer Kurvenfahrt zunächst innen laufenden Rades eine vorbestimmten Minimaldrehzahl unterschreitet. Die Notwendigkeit, dass ein Fahrer manuell zur Abschaltung der "Inchfunktion" in das Fahrprogramm eingreifen muss, besteht bei dieser bevorzugten Ausführungsform daher nicht.

Bei einer bevorzugten Ausführungsform des erfindungsgemäßen Lenkverfahrens wird der Antrieb des mindestens einen, bei einer Kurvenfahrt zunächst innen laufenden Rades etwa ab demjenigen Lenkwinkel des mindestens einen lenkbaren Rades frei geschaltet, bei dem das Flurförderzeug in die Karusselfahrt um das zunächst innen laufende Rad übergeht. Bei dieser bevorzugten Ausgestaltung des Verfahrens wird mit anderen Worten das zunächst innen laufende Rad solange angetrieben, solange es sich aufgrund des Fahrzustandes des Flurförderzeugs noch in Rotation befinden muss.

Bei dem erfindungsgemäßen Flurförderzeug ist eine Winkelerfassungsvorrichtung vorgesehen, die beim Erfassen eines bestimmten Lenkwinkels zumindest eines lenkbaren Rades ein Signal erzeugt, und die mit der Einrichtung zur Beeinflussung der Antriebsleistung wirkverbunden ist, wobei die Einrichtung zur Beeinflussung der Antriebsleistung derart ausgebildet ist, dass bei Erkennen des Signals der Antrieb des mindestens einen, bei einer Kurvenfahrt zunächst innen laufenden Rades unterbrochen wird. Es hat sich gezeigt, dass es auch zum "weichen" Übergang von einer engen Kurvenfahrt in eine Karusselfahrt nicht notwendig ist, die Antriebsleistung des zunächst innen laufenden Rades kontinuierlich zu reduzieren, sondern dass ein Freischalten dieses Rades ausreicht, wenn sich der Fahrzustand des Flurförderzeugs an eine Karusselfahrt annähert. Auch ist keine Umkehrung der Antriebsleistung erforderlich, wenn das Flurförderzeug in die Karusselfahrt übergeht.

Das Flurförderzeug ist erfindungsgemäß ein dreirädriges Fahrzeug, dessen Räder derart angeordnet sind, dass in Längsfahrt zwei Räder hintereinander etwa in ein und derselben Spur und das dritte Rad in einer anderen Spur verlaufen, und dass zur Einleitung einer Kurvenfahrt aus der Längsfahrt die zwei Räder lenkbar sind. Bei einem Flurförderzeug mit einer derartigen Radanordnung ist der Übergang zwischen einer engen Kurven- in eine Karusselfahrt möglich, ohne dass hierzu das dritte Rad, auch Mittelrad genannt, gelenkt werden muss.

Die Winkelerfassungseinrichtung ist derart ausgebildet, dass das Signal erzeugt wird, wenn der durch die gelenkten zwei Räder definierte Lenkpol bei einer Verringerung des Kurvenradius der Lenkachse des dritten Rades zumindest nahekommt.

Bei einer besonders bevorzugten Ausführungsform des erfindungsgemäßen Flurförderzeugs sind zur Bereitstellung der Antriebsleistung eine hydraulische Förderpumpe und zum Antrieb eines jeden angetriebenen Rades jeweils ein Hydraulikmotor vorgesehen. Die Antriebsleistung der Hydraulikmotoren kann dann reduziert werden, indem der Steueröldruck in der Förderpumpe, auch "Fahrpumpe" genannt, reduziert wird.

Die Erfindung soll nun anhand eines Ausführungsbeispiels erläutert werden. Es zeigen:
- Fig. 1: - schematisch - ein Blockdiagramm eines Lenksystems am Beispiel eines dreirädrigen Flurförderzeugs in Längsfahrt;
- Fig. 2: die Einzelheit II in Fig. 1, jedoch bei eingeschlagenem, lenkbaren Rad sowie
- Fig. 3a) bis d): - schematisch - dieses Fahrzeug in Geradeausfahrt sowie in drei verschiedenen Lenksituationen.

In den Figuren ist schematisch das Fahrgestell 1 als als Ganzes mit 100 bezeichnetes Flurförderzeug dargestellt. Das Flurförderzeug 100 umfasst zwei in Längsfahrtrichtung in einer Spur laufende Räder 2, 3 sowie ein drittes, in einer zweiten Spur laufendes Rad 4. Sämtliche Räder 2, 3, 4 sind um senkrecht zur Zeichenebene verlaufende Achsen A lenkbar angeordnet.

Zum Schwenken der Räder 2, 3, 4 sind jeweils einem der Räder zugeordnete Hydraulikmotoren 5, 6, 7 vorgesehen, die einenends an dem Fahrgestell 1, anderenends an einem Lenkhebel 8, 9, 10 angelenkt sind.

Jeder Hydraulikmotor ist über eine Hydraulikleitung 11, 12, 13 mit einem Lenkblock 21 verbunden. Bei diesem Lenkblock 21 handelt es sich um eine Mehrventilanordnung, die abhängig vom gewählten Lenkprogramm die Hydraulikmotoren 5, 6, 7 mit Hydraulikflüssigkeit versorgt. Über Hydraulikleitungen 16.1, 16.2 kann in Abhängigkeit des gewählten Lenkprogramms die von einem Lenkorbitrol 15 zugeführte Hydraulikflüssigkeit direkt an einzelne Hydraulikmotoren 6, 7 geleitet werden, um beim Fahrer ein fahrzustandsabhängiges Lenkgefühl zu erzeugen.

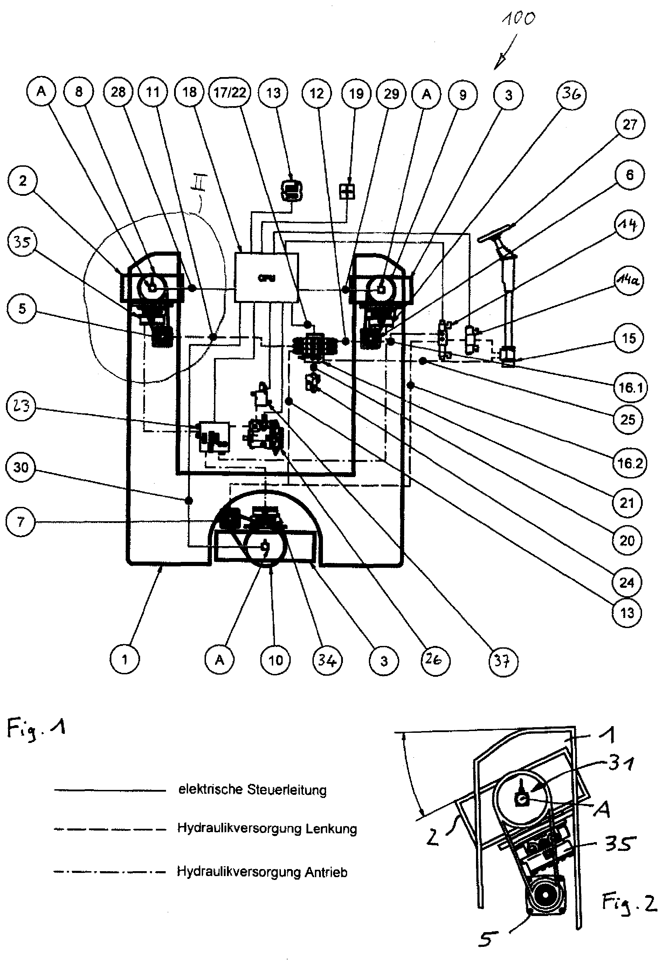

Zwischen dem Lenkorbitrol 15 und dem Lenkblock 21 ist ein elektrisch betätigbares Umschaltventil 14 eingeschaltet. Es ist mit einer Signalleitung mit einer Steuereinheit 18 verbunden, die mit einer Einrichtung zum Speichern mehrerer Fahrprogramme (beispielsweise Längs- und Querfahrtprogramme) ausgebildet ist. Das Umschaltventil dient dazu, die Räder in Abhängigkeit des jeweils gewählten Fahrprogramms in die Ausgangsposition (bei in der Nullstellung befindlichen Lenkgeber) zu verlagern. In Fig. 1 ist dies die Geradeausstellung in Längsfahrt. Wird nun das Programm "Querfahrt" gewählt, so sorgt das Umschaltventil 14 dafür, dass sämtliche Räder um ihre jeweilige Lenkachse A um 90° verschwenkt werden.

Darüber hinaus ist ein weiteres Schaltventil 14a in die Hydraulikleitung eingeschaltet und mit der Steuereinheit 18 verbunden. Es dient dazu, den Lenksinn, in welchem die gelenkten Räder bei einer Betätigung des Lenkgebers, beispielsweise bei einer Drehbetätigung des Lenkrades, so an die Fahrtrichtung anzupassen, dass das Fahrzeug eine Richtungsänderung entsprechend der Betätigung des Lenkgebers vollzieht.

Der Lenkblock 21 ist darüber hinaus über eine Signalleitung 17 mit der Steuereinheit 18 verbunden. Die Zufuhr oder Abfuhr von Hydraulikflüssigkeit über die Hydraulikleitungen 11, 12, 13 zu bzw. von den Hydraulikmotoren 5, 6, 7 erfolgt in Abhängigkeit des Fahrprogramms, welches mit Hilfe einer Eingabeeinrichtung 19 von einem Fahrer ausgewählt worden ist. Ferner kann über die Eingabeeinrichtung die Fahrtrichtung gewählt werden.

An die Steuereinheit 18 ist über eine elektrische Steuerleitung eine hydraulische Fahrpumpe 26 angeschlossen. Sie dient der Bereitstellung von unter Druck befindlicher Hydraulikflüssigkeit, mit welcher hydraulische Antriebsmotoren 34, 35, 36 beaufschlagbar sind, von denen jeweils einer einem angetriebenen Rad zugeordnet ist.

Zwischen die Antriebsmotoren 34, 35, 36 und die Fahrpumpe 26 ist ein Fahrblock 23 in die Hydraulikleitungen eingeschaltet, der ebenfalls an die Steuereinheit 18 über eine Signalleitung angeschlossen ist. Der Fahrblock 23 verteilt die Hydraulikölströme auf die Antriebsmotoren 34, 35, 36 entsprechend des jeweils gewählten Fahrprogramms.

Der Lenkblock 21 umfasst ein Steuerblocksegment welches seinerseits über eine Signalleitung 22 ebenfalls mit dem Lenkcomputer verbunden ist. Auch das Steuerblocksegment dient der Verarbeitung von Signalen für die Fahrtrichtungsumschaltung und beeinflusst die in den Hydraulikleitungen in Abhängigkeit von Lenkbefehlen herrschenden Drücke und Strömungen.

Das Steuerblocksegment des Lenkblocks 21 ist darüber hinaus über eine Hydraulikleitung 20 mit einem Prioritätsventil 24 verbunden. Es dient dazu, vorrangig die Lenkungskomponenten mit Hydrauliköl zu versorgen. Zunächst wird über das Prioritätsventil 24 der Lenkblock 21 mit Hydrauliköl versorgt. In dem Lenkblock 21 ist ein weiters Prioritätsventil integriert, welches bei Bedarf den Lenkorbitrol 15, auch Lenkeinheit genannt, mit Hydrauliköl versorgt.

Der Betätigung des Lenkorbitrols 15 bzw. der Lenkeinheit dient ein mechanisch mit ihm verbundener Lenkgeber 27 in Form eines Lenkrades.

An sämtlichen Rädern 2, 3, 4 sind Winkelaufnehmer vorgesehen, die über Signalleitungen 28, 29, 30 mit der Steuereinheit 18 verbunden sind. Die Steuereinheit 18 vergleicht die so erhaltenen Lenkwinkel-Istdaten mit den in Abhängigkeit des Lenkgebers und des jeweils gewählten Fahrprogramms zu erwartenden Solldaten und steuert im Bedarfsfall das Steuerblocksegment und/oder den Lenkblock im Sinne eines Soll/Istwertvergleichs an.

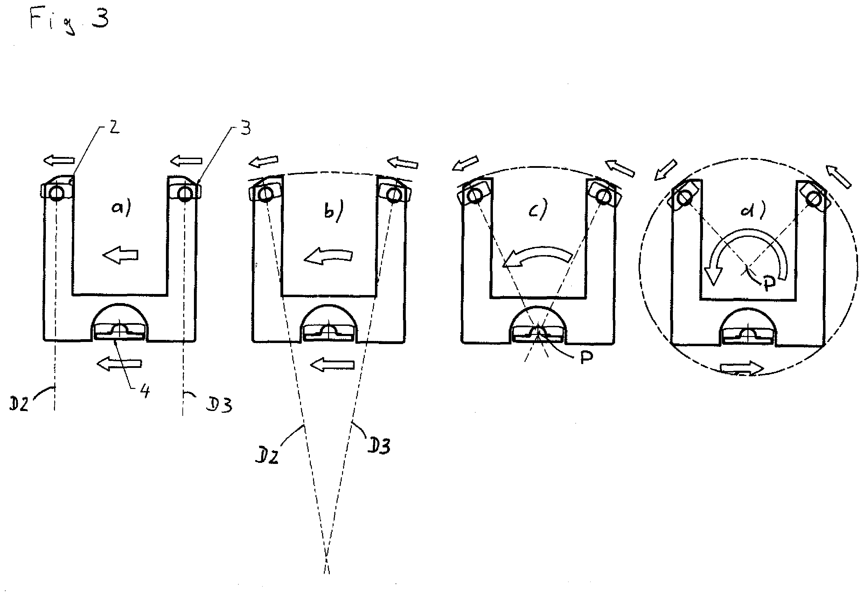

Bei einer Längsfahrt des Flurförderzeugs 1, die die Erfindung betrifft, werden lediglich die beiden, in einer Spur laufenden Räder 2, 3 lenkbetätigt, das dritte Rad 4 (Mittelrad) verbleibt ungelenkt. Eine Längsfahrt ist in Fig. 3a) durch die eingezeichneten Pfeile symbolisiert. Bei dieser Längsfahrt liegt der Lenkpol im Unendlichen, mit anderen Worten: Die Drehachsen D2, D3 der Räder 2, 3 schneiden sich nicht.

Erfolgt nun eine Lenkbetätigung nach links, wie dies in Fig. 3b) symbolisiert ist, so werden die beiden Räder 2, 3 im umgekehrten Drehsinne, jedoch um gleiche Winkel drehbetätigt, so dass sich die Drehachsen D2, D3 im Lenkpol P schneiden. Das Flurförderzeug fährt einen Bogen um den Lenkpol P, wobei das Rad 4 (Mittelrad) nun einen kleineren Weg als die Räder 2, 3 zurücklegen muss.

Erhöht man nun den Lenkeinschlag, so wandert der Lenkpol P auf die Lenkachse des Rades 4 zu. Hat er diese erreicht, wie in Fig. 3c) dargestellt, so hat das Flurförderzeug das Bestreben, sich um die Lenkachse des Rades 4 zu drehen, d.h. in eine Karusselfahrt überzugehen. Das Rad 4 muss in dem Augenblick zum Stillstand kommen.

Um hierbei ein Radieren der Räder auf dem Untergrund und einen damit verbundenen erhöhten Verschleiß, sowie unkontrollierte Fahrzustände zu vermeiden, wird etwa in dem Moment, wo der Lenkpol P mit der Lenkachse des Rades 4 zusammenfällt, der in der Zeichnung nicht dargestellte Antrieb des zuvor ebenso wie die Räder 2, 3 individuell angetriebenen Rades 4 in einer Weise unterbrochen, die es erlaubt, dass sich hiernach das Rad 4 zumindest annähernd frei drehen kann.

Wird nun der Lenkeinschlag weiter erhöht, so wandert der Lenkpol P zwischen das Rad 4 einerseits und die Räder 2, 3 andererseits, und das Fahrzeug dreht sich um den Lenkpol P in einer Karusselfahrt. Das dritte Rad 4 kehrt gegenüber der ursprünglichen Drehrichtung, in der es selbst drehangetrieben war, seine Drehrichtung um. Dies ist durch die Unterbrechung des Antriebs des dritten Rades 4, mit anderen Worten: Durch dessen Freischaltung möglich.

Die Freischaltung des dritten Rades 4, welches bei der Kurvenfahrt gemäß Fig. 3 das zunächst innen laufende Rad ist, erfolgt beim Erreichen eines bestimmten Lenkwinkels der gelenkten Räder 2 und/oder 3. Hierzu ist - wie in Fig. 2 schematisch am Beispiel des Rades 3 dargestellt ist - zumindest an einem der Räder 2, 3 eine Winkelerfassungsvorrichtung 31 vorgesehen, welche über Signalleitungen 28, 29 mit der Steuereinheit 18 verbunden ist, so dass beim Erreichen des Lenkwinkels, bei welchem der Lenkpol P mit der Lenkachse des Rades 4 zusammenfällt, die Antriebseinrichtung des Rades 4 mit Hilfe der Steuereinheit 18 abgeschaltet bzw. dieses Rad freigeschaltet wird.

Darüber hinaus ist das erfindungsgemäße Flurförderzeug mit einer sogenannten "Auto-Inchen" Einrichtung versehen, deren Funktionsweise nachfolgend beschrieben werden soll.

Um das Fahrverhalten bei Vergrößern des Lenkeinschlags und damit kleiner werdendem Kurvenradius zu verbessern, wird ab einem bestimmten, über die Steuereinrichtung 18 vorgebbaren Lenkwinkel die Antriebsleistung, mit welcher die Antriebsmotoren 34, 35, 36 beaufschlagt werden, reduziert. Es wird beispielsweise der Steueröldruck in der Fahrpumpe gesenkt, so dass der von der Fahrpumpe abgegebene Volumenstrom reduziert wird. Hierzu dient ein "Auto-Inchen-Ventil" 37, welches über eine Signalleitung mit der Steuereinheit 18 und über eine Hydraulikleitung mit der Fahrpumpe 26 verbunden ist. Das Flurförderzeug wird hierdurch abgebremst. Dieser Vorgang findet beispielsweise bei Kurvenradien zwischen denjenigen in Fig. 3b) und 3c) dargestellten statt.

Um jedoch zu vermeiden, dass das Flurförderzeug bei engen Radien an Hindernissen aufgrund der reduzierten Antriebsleistung zum Stillstand kommt, ist an dem Rad 4 eine Einrichtung zur Erfassung von dessen Drehzahl vorgesehen. Detektiert diese eine Drehzahl unter einem vorgegebenen Minimalwert, so erzeugt diese ein an eine Steuereinrichtung 18 übermitteltes Signal, worauf die Antriebsleistung wieder erhöht wird.

### Bezugszeichenliste:

- 100: Flurförderzeug
- 1: Fahrgestell
- 2, 3: Räder
- 4: Rad
- 5, 6, 7: Hydraulikmotor
- 8, 9, 10: Lenkhebel
- 11, 12, 13: Hydraulikleitungen
- 14, 14a: Umschaltventil
- 15: Lenkorbitrol
- 16.1, 16.2: Hydraulikleitung
- 17: Signalleitung
- 18: Steuereinheit
- 19: Eingabeeinrichtung
- 20: Hydraulikleitung
- 21: Steuerblocksegmente
- 22: Signalleitung
- 23: Fahrblock
- 24: Prioritätsventil
- 25: Hydraulikleitung
- 26: Fahrpumpe
- 27: Lenkgeber
- 28, 29, 30: Signalleitungen
- 31: Winkelerfassungsvorrichtung
- 34, 35, 36: Antriebsmotoren
- 37: Auto-Inchen-Ventil

- A: Achsen
- D2, D3: Drehachsen
- P: Lenkpol

## Patentansprüche

1. Lenkverfahren eines Flurförderzeugs (100) mit mindestens zwei angetriebenen, in Längsfahrt in verschiedenen Spuren laufenden Rädern (2, 3; 4), von denen mindestens eines lenkbar ist und mindestens eines bei einer Kurvenfahrt zunächst innen läuft,
wobei der Antrieb des mindestens einen bei einer Kurvenfahrt zunächst innen laufenden Rades (4) bei Erreichen eines bestimmten Lenkwinkels aus der Längsfahrtstellung des mindestens einen lenkbaren Rades (2, 3) freigeschaltet wird,
**dadurch gekennzeichnet,**
**dass** die Antriebsleistung der mindestens zwei angetriebenen Räder (2, 3; 4) bei Erreichen eines bestimmten Lenkwinkels des mindestens einen lenkbaren Rades (2, 3) reduziert wird und dass die Drehzahl des mindestens einen bei einer Kurvenfahrt zunächst innen laufenden Rades (4) aufgenommen und bei Unterschreiten einer vorbestimmten Minimaldrehzahl die Antriebsleistung der mindestens zwei angetriebenen Räder (2, 3; 4) wieder erhöht wird.

2. Lenkverfahren nach Anspruch 1, **dadurch gekennzeichnet, dass** der Antrieb des mindestens einen bei einer Kurvenfahrt zunächst innen laufenden Rades (4) bei etwa demjenigen Lenkwinkel des mindestens einen lenkbaren Rades (2 3) freigeschaltet wird, bei dem das Flurförderzeug (100) in eine Karusselfahrt um das zunächst innen laufende Rad (4) übergeht.

3. Lenkverfahren nach Anspruch 1 oder 2, **dadurch gekennzeichnet, dass** der Antrieb der angetriebenen Räder (2, 3; 4) hydraulisch erfolgt und zur Reduzierung oder Erhöhung der Antriebsleistung der Steueröldruck in einer Fahrpumpe verringert oder erhöht wird.

4. Flurförderzeug (100),
mit mindestens zwei angetriebenen, in Längsfahrt in verschiedenen Spuren laufenden Rädern (2, 3; 4), von denen mindestens eines lenkbar ist und mindestens eines bei einer Kurvenfahrt zunächst innen läuft,
und mit einer Einrichtung zur Beeinflussung der Antriebsleistung der angetriebenen Räder,
wobei eine Winkelerfassungsvorrichtung (31) vorgesehen ist, die bei Erfassen eines Lenkwinkels zumindest eines lenkbaren Rades (2, 3) ein Signal erzeugt und mit der Einrichtung zur Beeinflussung der Antriebsleistung wirkverbunden ist,
und die Einrichtung zur Beeinflussung der Antriebsleistung derart ausgebildet ist, dass bei Erkennen des Signals der Antrieb des mindestens einen bei einer Kurvenfahrt zunächst innen laufenden Rades (4) unterbrochen wird, wobei das Flurförderzeug ein dreirädriges Fahrzeug ist, dessen Räder (2, 3; 4) derart angeordnet sind, dass in Längsfahrt zwei Räder (2, 3) hintereinander etwa in ein und derselben Spur und das dritte Rad (4) in einer anderen Spur verlaufen, und das zur Einleitung einer Kurvenfahrt aus der Längsfahrt die zwei Räder (2, 3) lenkbar sind,
und die Räder (2, 3) um Lenkwinkel von jeweils 90° um ihre Lenkachsen (A) in Grundpositionen abhängig vom Lenkprogramm lenkbar angeordnet sind,
**dadurch gekennzeichnet, dass**
die Winkelerfassungseinrichtung (31) derart ausgebildet ist, dass das Signal erzeugt wird, wenn der durch die gelenkten zwei Räder (2, 3) definierte Lenkpol (P) bei einer Verringerung des Kurvenradius der Lenkachse (A) des dritten Rades (4) zumindest nahe kommt.

5. Flurförderzeug nach Anspruch 4, **dadurch gekennzeichnet, dass** zur Bereitstellung der Antriebsleistung eine Förderpumpe und zum Antrieb eines jeden angetriebenen Rades jeweils ein Hydraulikmotor vorgesehen sind.

## Claims

1. Steering method for an industrial truck (100) having at least two driven wheels (2, 3; 4) running in different tracks in longitudinal travel, of which wheels at least one is steerable and at least one initially runs on the inside when cornering,
the drive of the at least one wheel (4) running on the inside during cornering being activated from the longitudinal travel position of the at least one steerable wheel (2, 3) when a specific steering angle is reached, **characterized in that** the drive power of the at least two driven wheels (2, 3; 4) is reduced when a specific steering angle of the at least one steerable wheel (2, 3) is reached, and **in that** the rotational speed of the at least one wheel (4) initially running on the inside during cornering is recorded and the drive power of the at least two driven wheels (2, 3; 4) is increased again if a predetermined minimum rotational speed is not met.

2. Steering method according to claim 1, **characterized in that** the drive of the at least one wheel (4) running on the inside during cornering is activated at approximately the steering angle of the at least one steerable wheel (2, 3) at which the industrial truck (100) transitions into carousel travel around the wheel (4) initially running on the inside.

3. Steering method according to either claim 1 or claim 2, **characterized in that** the driven wheels (2, 3; 4) are hydraulically driven and the control oil pressure in a drive pump is reduced or increased to reduce or increase the drive power.

4. Industrial truck (100), having at least two driven wheels (2, 3; 4) running in different tracks in longitudinal travel, of which wheels at least one is steerable and at least one initially runs on the inside when cornering,
and having a device for influencing the drive power of the driven wheels,
an angle detection apparatus (31) being provided which generates a signal when a steering angle of at least one steerable wheel (2, 3) is detected and which is operatively connected to the device for influencing the drive power,
and the device for influencing the drive power being designed such that when the signal is detected, the drive of the at least one wheel (4) running on the inside when cornering is interrupted,
the industrial truck being a three-wheeled vehicle, the wheels (2, 3; 4) of which are arranged in such a way that in longitudinal travel two wheels (2, 3) run one behind the other approximately in the same track and the third wheel (4) runs in another track, and the two wheels (2, 3) can be steered in order to initiate cornering from the longitudinal travel,
and the wheels (2, 3) being arranged so as to be steerable about their steering axes (A) by steering angles of 90° in each case in basic positions depending on the steering program, **characterized in that** the angle detection apparatus (31) is designed in such a way that the signal is generated when the steering pole (P) defined by the steered two wheels (2, 3) at least comes close to the steering axis (A) of the third wheel (4) when the cornering radius is reduced.

5. Industrial truck according to claim 4, **characterized in that** a supply pump is provided for providing the drive power and in each case a hydraulic motor is provided for driving each driven wheel.

## Revendications

1. Procédé de direction d'un chariot de manutention (100) comprenant au moins deux roues (2, 3; 4) entraînées se déplaçant dans deux voies différentes dans la course longitudinale, dont au moins une est dirigeable et au moins une passe d'abord à l'intérieur lors d'un trajet en virage,
l'entraînement de l'au moins une roue (4) passant d'abord à l'intérieur lors d'un virage étant activé lors de l'atteinte d'un angle de direction défini à partir de la position de course longitudinale de l'au moins une roue (2, 3) dirigeable, **caractérisé en ce que** la puissance motrice des au moins deux roues (2, 3; 4) entrainées est réduite lors de l'atteinte d'un angle de direction défini de l'au moins une roue (2, 3) dirigeable et **en ce que** la vitesse de l'au moins une roue (4) passant d'abord par l'intérieur lors d'un trajet de virage est enregistrée et lorsque la vitesse est inférieure à une vitesse minimale prédéfinie la puissance motrice des au moins deux roues (2, 3; 4) entrainées est augmentée.

2. Procédé de direction selon la revendication 1, **caractérisé en ce que** l'entraînement de l'au moins une roue (4) passant d'abord par l'intérieur lors d'un trajet de virage est activé à peu près à l'angle de direction de l'au moins une roue (2, 3) dirigeable auquel le chariot de manutention (100) passe à un tour de carrousel autour de la roue (4) passant d'abord par l'intérieur lors d'un trajet de virage.

3. Procédé de direction selon la revendication 1 ou 2, **caractérisé en ce que** l'entraînement des roues (2, 3; 4) entraînées est hydraulique et, pour la réduction ou l'augmentation de la puissance motrice, la pression de l'huile de commande dans une pompe de traction est réduite ou augmentée.

4. Chariot de manutention (100) comprenant au moins deux roues (2, 3; 4) entraînées se déplaçant dans deux voies différentes dans la course longitudinale, dont au moins une est dirigeable et au moins une passe d'abord à l'intérieur lors d'un trajet de virage,
et comprenant un dispositif pour influencer la puissance motrice des roues entraînées,
un dispositif de détection d'angles (31) étant prévu, lequel génère un signal lors de la détection d'un angle de direction d'au moins une roue (2, 3) dirigeable et qui est en liaison active avec le dispositif pour influencer la puissance motrice,
et le dispositif pour influencer la puissance motrice étant conçu de telle façon que, lors de la reconnaissance du signal, l'entraînement de l'au moins une roue (4) passant d'abord à l'intérieur lors d'un trajet de virage est interrompu,
le chariot de manutention étant un véhicule à trois roues, dont les roues (2, 3; 4) sont disposées de telle façon que, deux roues (2, 3) se déplacent approximativement dans une et même voie dans la course longitudinale et la troisième roue (4) se déplace dans une autre voie, et en ce que, pour l'initiation d'un trajet de virage à partir de la course longitudinale, les deux roues (2, 3) sont dirigeables,
et les roues (2, 3) étant disposées de manière dirigeable selon des angles de 90° respectivement autour de leurs axes de direction (A) dans des positions de base dépendantes du programme de direction, **caractérisé en ce que** le dispositif de détection d'angles (31) étant conçu de telle façon que le signal est généré lorsque le pôle de direction (P) défini par les deux roues (2, 3) dirigeables s'approche au moins de l'axe de direction (A) de la troisième roue (4) lors d'une réduction du rayon de courbure.

5. Chariot de manutention selon la revendication 4, **caractérisé en ce qu'une** pompe d'alimentation est prévue pour la fourniture d'une puissance motrice et un moteur hydraulique respectif est prévu pour l'entraînement de chacune des roues entraînées.
